# FASCICULE DE BREVET EUROPEEN

(11) **EP 3 826 867 B1**
(45) Date de publication et mention de la délivrance du brevet: **30.08.2023**
(21) Numéro de dépôt: 19734436.9
(22) Date de dépôt: 04.07.2019
(51) Int. Cl.: B60J 10/80, B60J 10/70, B60Q 3/70

(54) **JOINT DE PORTIÈRE PORTANT UNE SOURCE LUMINEUSE**
TÜRDICHTUNG MIT LICHTQUELLE
DOOR SEAL CARRYING A LIGHT SOURCE

(30) Priorité: 25.07.2018 FR 1856921
(43) Date de publication de la demande: 02.06.2021
(73) Titulaire: Renault s.a.s, 92100 Boulogne Billancourt (FR)
(72) Inventeur: BEZEAULT, Loic, 78150 LE CHESNAY (FR); HODIESNE, Thierry, 28410 Boutigny-Prouais (FR); MARRY, Stefan, 91530 Saint Chéron (FR)
(74) Mandataire: Renault Group
(86) Numéro de dépôt international: PCT/EP2019/068038
(87) Numéro de publication internationale: WO 2020/020600

(56) Documents cités:
- EP-A1- 2 930 062
- WO-A2-2014/140130
- DE-A1-102007 060 159
- DE-A1-102016 108 451
- DE-B3-102016 218 755
- FR-A1- 3 051 731
- JP-A- 2009 083 565
- US-A- 6 116 678
- US-A1- 2002 126 498

## Description

### DOMAINE TECHNIQUE DE L'INVENTION

L'invention concerne un ensemble comportant une vitre pour fermer un habitacle de véhicule automobile et au moins une première source lumineuse portée par un premier support associé, chaque première source lumineuse étant décalée transversalement par rapport à la vitre et émettant des rayons lumineux directement vers une première face libre de la vitre.

### ARRIERE PLAN TECHNIQUE DE L'INVENTION

Les constructeurs automobiles ont déjà proposé d'associer au moins une vitre pour fermer un habitacle avec une source lumineuse pour permettre de produire une lumière semblant émaner directement de la vitre. Cet effet peut être réalisé en dissimulant la source lumineuse dans la carrosserie du véhicule, en bordure de la vitre. Les rayons lumineux pénètrent dans la vitre et se propagent à l'intérieur de la vitre par réflexions successives entre les deux faces principales, les rayons lumineux sortant de la vitre progressivement pour donner une impression de luminescence.

Il est possible d'associer un tel dispositif avec une vitre comportant des motifs de diffusion de la lumière. Lorsque la source lumineuse est éteinte, les motifs de diffusion sont peu perceptibles à l'oeil nu. En revanche, lorsque la source lumineuse est allumée, les rayons lumineux qui atteignent le motif de diffusion sont diffusés, donnant ainsi la sensation que le motif de diffusion est lumineux.

On a déjà proposé d'agencer des sources lumineuses en vis-à-vis d'un chant de la vitre pour éclairer les motifs de diffusion. Or, on a constaté qu'un tel agencement n'est pas adaptable à toutes les géométries de vitres, notamment les vitres latérales coulissantes qui équipent les portières du véhicule. En outre la composition des vitres d'habitacle de véhicule automobile, réalisées en verre trempé ou en verre feuilleté ou en verre organique, tel que du polyméthacrylate de méthyle (PMMA) ou du polycarbonate (PC), ne permet pas une propagation suffisante de la lumière pour permettre d'éclairer correctement des motifs lumineux.

Il a déjà été proposé de faire entrer la lumière par la face extérieure de la vitre au lieu de la face de chant. A cet effet, la source lumineuse est agencée dans un joint extérieur de la portière. La source lumineuse est formée par un guide de lumière qui est éclairé par une source lumineuse indirecte.

Le document FR 3 051 731 A1 divulgue un joint d'étanchéité de portière interposé entre l'un des bords d'une fente de la portière et une face en vis-à-vis d'une vitre coulissant dans la fente, comportant un corps de joint fixé audit bord de la fente et au moins une lèvre souple s'étendant transversalement depuis le corps jusqu'à un bord extérieur libre qui est en appui sur ladite face de la vitre, au moins une portion visible de la vitre en position extrême de fermeture étant située au-dessus du joint d'étanchéité; où ce que le joint d'étanchéité présente, en coupe transversale, un logement, débouchant par une ouverture, au moins une source lumineuse étant agencée dans le logement sur une face du joint formant un support de manière à émettre des rayons lumineux sortant par l'ouverture pour atteindre la portion visible de la vitre directement par ladite face en vis-à-vis.

Cependant, cette solution est onéreuse car elle impose de réaliser un joint spécifique pour ce genre d'application.

En outre, l'utilisation d'un guide de lumière éclaire simultanément toute la longueur de la vitre, sans possibilité d'éclairer indépendamment différentes zones de la vitre.

De plus, le joint extérieur du véhicule est conçu pour éviter que de l'eau ne s'accumule. Il est en outre indispensable de protéger les sources lumineuses de la pollution extérieure qui risque de réduire rapidement la luminosité des sources lumineuses par dépôt d'une couche de poussière. A cet égard, la source lumineuse est agencée dans un logement qui est situé au-dessous de lèvres d'étanchéité du joint. De ce fait, la source lumineuse ne peut pas éclairer la vitre au plus proche de sa portion visible depuis l'extérieur. De ce fait, les rayons lumineux ne sont visibles d'un observateur qu'après avoir pénétré à l'intérieur de la vitre.

Ce passage à l'intérieur de la vitre entraîne des pertes d'intensité lumineuse. Il en résulte que le rendement lumineux d'un tel système n'est pas optimal.

### BREF RESUME DE L'INVENTION

L'invention propose un joint d'étanchéité de portière interposé entre l'un des bords d'une fente de la portière et une face en vis-à-vis d'une vitre coulissant dans la fente, tel que dans la revendication 1.

Selon d'autres caractéristiques de l'invention :
- le logement du joint est délimité par la lèvre souple et par une visière supérieure du corps, l'ouverture étant réservée transversalement entre un bord d'extrémité libre de la visière et la lèvre ;
- le support est commun à un groupe de sources lumineuses qui sont agencées longitudinalement en ligne sur dans le logement sur ledit support ;
- chaque source lumineuse est formée par une source lumineuse ponctuelle, telle qu'une diode électroluminescente ;
- le groupe de sources lumineuses est formé par une bande de diodes électroluminescentes ;
- un diffuseur de lumière est interposé entre la source lumineuse et l'ouverture du logement ;
- le diffuseur de lumière est commun à toutes les sources lumineuses ;
- le diffuseur de lumière est formé par une membrane qui renferme de façon étanche la ou les sources lumineuses ;
- la portion visible de la vitre comporte une zone marquée qui est munie de motifs de diffusion de la lumière, les sources lumineuses étant agencées pour que les rayons lumineux atteignent la vitre directement par la zone marquée pour éclairer au moins une partie des motifs de diffusion ;

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue du côté intérieur qui représente une partie supérieure d'une portière équipée d'une fenêtre fermée par une vitre réalisée selon les enseignements de l'invention ;
- la figure 2 est une vue similaire à celle de la figure 1 dans laquelle un panneau de carrosserie de la portière a été enlevé ;
- la figure 3 est une vue en coupe transversale verticale selon le plan de coupe 3-3 de la figure 1 qui représente le joint d'étanchéité intérieur équipé de sources lumineuses pour éclairer la vitre ;
- la figure 4 est une vue schématique en coupe transversale verticale qui explique le fonctionnement de l'ensemble comportant la vitre et les sources lumineuses équipant la portière de la figure 1 ;
- la figure 5 est une vue de côté qui représente une source lumineuse équipant le joint d'étanchéité intérieur de la portière.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif des orientations longitudinale, dirigée d'arrière en avant, verticale, dirigée de bas en haut, et transversale, dirigée de l'extérieur vers l'intérieur de l'habitacle, qui sont indiquées par le trièdre "L,V,T" des figures. L'orientation verticale est indépendante de la direction de la gravité terrestre.

Dans la suite de la description, on utilisera le terme intérieur, respectivement extérieur, pour désigner un élément tourné vers l'intérieur de l'habitacle, respectivement vers l'extérieur de l'habitacle.

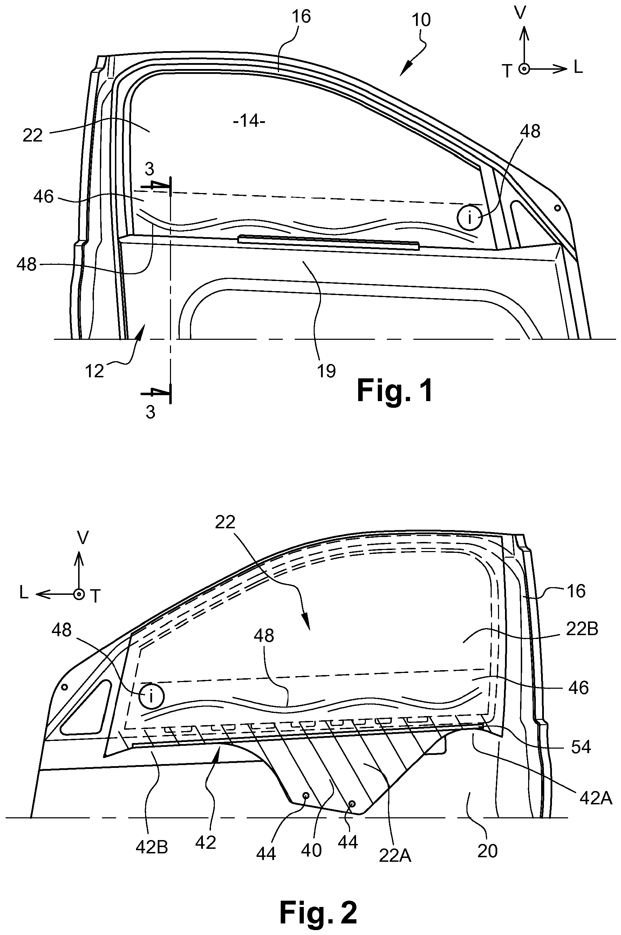

On a représenté à la figure 1 une portière 10 de véhicule automobile qui est destinée à fermer un habitacle (non représenté) du véhicule automobile. La portière 10 comporte un corps creux 12 inférieur et une fenêtre 14 supérieure qui est délimitée par un cadre 16 qui s'étend verticalement vers le haut depuis le corps creux 12.

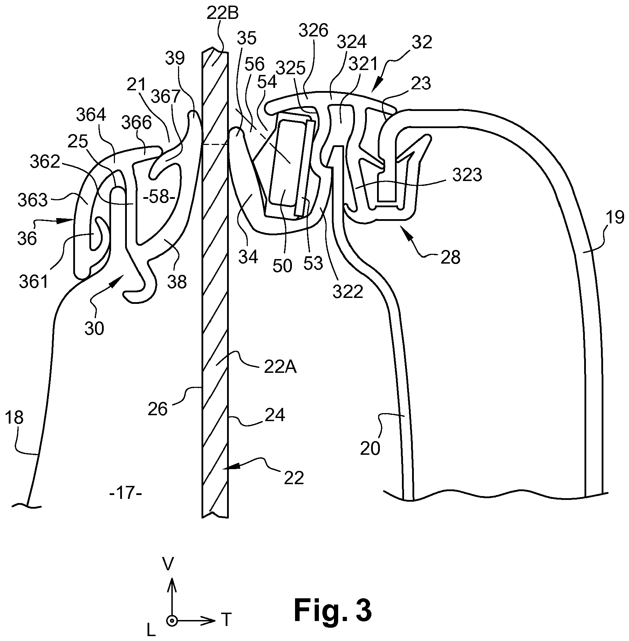

Comme cela est représenté aux figures 2 et 3, l'espace 17 interne du corps creux 12 est délimité transversalement vers l'extérieur de l'habitacle par un panneau 18 de carrosserie globalement vertical longitudinal, et vers l'intérieur de l'habitacle par un caisson 20 de garniture globalement vertical longitudinal. Le caisson 20 de garniture est ici réalisé en une pièce avec le cadre 16 de fenêtre. Le caisson 20 de garniture est ici habillé d'un panneau 19 intérieur de garniture.

Le corps creux 12 est ouvert vers le haut par l'intermédiaire d'une fente 21 longitudinale. La fente 21 débouche verticalement dans le plan de la fenêtre 14. En d'autres termes, la fenêtre 14 est agencée dans le prolongement vertical de la fente 21.

La fente 21 est délimitée transversalement entre un bord 23 intérieur, formé par un bord supérieur du caisson 20 de garniture, et un bord 25 extérieur, formé par un bord supérieur du panneau 18 de carrosserie.

La fenêtre 14 est destinée à être fermée par une vitre 22 qui s'étend globalement dans un plan vertical longitudinal. Bien entendu, la vitre 22 peut présenter une forme légèrement galbée. La vitre 22 est délimitée transversalement dans le sens de l'épaisseur par une première face 24 libre, formant ici la face 24 intérieure de la vitre 22, et par une deuxième face 26 libre, formant ici la face 26 extérieure de la vitre 22.

Il s'agit ici d'une vitre 22 réalisée en verre trempé ou en verre feuilleté ou en verre organique, tel que du polyméthacrylate de méthyle (PMMA) ou du polycarbonate (PC). La vitre 22 est monobloc.

La vitre 22 est montée coulissante verticalement dans la fente 21 de la portière 10 entre une position extrême de fermeture dans laquelle elle ferme totalement la fenêtre 14, comme cela est représenté aux figures 1 et 2, et une position extrême d'ouverture (non représentée) dans laquelle la vitre 22 est escamotée vers le bas au moins partiellement à l'intérieur du corps creux 12.

Pour permettre d'éviter que de l'humidité et/ou des particules polluantes n'entrent à l'intérieur du corps creux 12, la fente 21 est fermée par un joint 28 intérieur d'étanchéité et par un joint 30 extérieur d'étanchéité. Les joints 28, 30 se présentent sous la forme de profilés en élastomère qui s'étendent longitudinalement.

Le joint 28 intérieur est interposé entre le bord 23 intérieur de la fente 21 et la face 24 intérieure en vis-à-vis de la vitre 22. En vue de profil représentée à la figure 3, le joint 28 intérieur comporte un corps 32 longitudinal qui est emboîté avec le bord 23 intérieur de la fente 21. Le corps 32 comporte ainsi une première rainure 321 d'emboîtement qui débouche verticalement vers le bas et qui est délimitée transversalement par une paroi 322 verticale longitudinale extérieure et par une paroi 323 verticale longitudinale intérieure. La rainure 321 est en outre délimitée vers le haut par une paroi 324 supérieure horizontale qui forme un enjoliveur agencé dans la continuité d'une face supérieure du caisson 20 de garniture. Le corps 32 comporte aussi une rainure longitudinale d'emboîtement d'un bord du panneau 19 de garniture.

Une lèvre 34 souple flexible élastiquement s'étend transversalement vers l'extérieur depuis un bord inférieur de la paroi 322 verticale extérieure de la rainure 321 jusqu'à un bord 35 extérieur libre. La lèvre 34 est rappelée élastiquement contre la vitre 22 de manière que le bord 35 extérieur libre de la lèvre 34 soit en appui sur la face 24 intérieure de la vitre 22 pour réaliser la fonction d'étanchéité. Dans cette position contrainte contre la vitre 22, la lèvre 34 et la face 325 extérieure de la paroi 322 extérieure délimitent un logement 54.

La paroi 324 supérieure du corps 32 est prolongée transversalement vers l'extérieur par une visière 326 supérieure horizontale. La visière 326 présente un bord libre longitudinal d'extrémité extérieure qui est agencé à distance de la face 24 intérieure de la vitre 22. La visière 326 participe ainsi à délimiter le logement 54 verticalement vers le haut.

Comme cela est visible à la figure 3, le logement 54 présente une ouverture 56 qui est réservée transversalement entre le bord 35 extérieur libre de la lèvre 34 et le bord libre de la visière 326.

Le joint 30 extérieur est interposé entre le bord 25 extérieur de la fente 21 et la face 26 extérieure en vis-à-vis de la vitre 22. Le joint 30 extérieur comporte un corps 36 longitudinal qui est emboîté avec le bord 25 extérieur de la fente 21. Le corps 36 comporte ainsi une rainure 361 d'emboîtement qui débouche verticalement vers le bas et qui est délimitée transversalement par une paroi 362 verticale longitudinale intérieure et par une paroi 363 verticale longitudinale extérieure. La rainure 361 est en outre délimitée vers le haut par une paroi 364 supérieure horizontale qui forme un enjoliveur.

Une lèvre 38 souple flexible élastiquement s'étend transversalement vers l'intérieur depuis un bord inférieur de la paroi 362 verticale intérieure de la rainure 361 jusqu'à un bord 39 extérieur libre. La lèvre 38 est rappelée élastiquement contre la vitre 22 de manière que le bord 39 extérieur libre de la lèvre 38 soit en appui sur la face 26 extérieure de la vitre 22 pour réaliser la fonction d'étanchéité. Dans cette position contrainte contre la vitre 22, la lèvre 38 et la paroi 362 extérieure délimitent un logement 58.

La paroi 364 supérieure du corps 36 est prolongée transversalement vers l'intérieur par une visière 366 supérieure horizontale. La visière 366 présente un bord libre longitudinal d'extrémité intérieure qui est agencé à distance de la face 26 extérieure de la vitre 22. La visière 366 participe ainsi à délimiter le logement 58 verticalement vers le haut.

Contrairement au logement 54 du joint 28 extérieur, le logement 58 du joint 30 extérieur est fermé par une lamelle 367 qui s'étend depuis le dos de la lèvre 38 jusqu'à être en contact avec la visière 326. Cette lamelle 367 permet notamment d'éviter que de l'eau ou des éléments polluants ne s'accumulent dans le logement 58.

Chaque joint 28, 30 intérieur et extérieur comporte ici une unique lèvre 34, 38 souple. Les deux lèvres 34, 38 appuient sur la vitre 22 transversalement en vis-à-vis l'une de l'autre pour équilibrer les efforts appliqués à la vitre 22. Les bords 35, 39 libres des lèvres 34, 38 souples sont ici agencés sensiblement à la même hauteur que les bords libres des visières 326, 366 associées.

Comme cela est représenté à la figure 2, en position extrême de fermeture de la vitre 22, une portion inférieure de la vitre 22, dite portion 22A cachée, est cachée à l'intérieur du corps creux 12, tandis qu'une portion supérieure de la vitre 22, dite portion 22B visible, est visible par un observateur extérieur dans le cadre 16 de la fenêtre 14. La portion 22A cachée a été indiquée par des hachures aux figures 2 à 4. La portion 22A cachée est ici définie comme étant située au-dessous des lèvres 34, 38 des joints 28, 30 tandis que la portion 22B visible s'étend au-dessus des joints 28, 30 en position extrême de fermeture.

La portion 22A cachée demeure à l'intérieur du corps creux 12 quelle que soit la position de la vitre 22 entre ses deux positions extrêmes. Comme représenté à la figure 2, la portion 22A cachée comporte ici une langue 40 qui s'étend verticalement vers le bas depuis le milieu du bord 42 inférieur de la vitre 22. Ainsi le bord 42 inférieur de la vitre 22 présente deux tronçons 42A, 42B d'extrémité qui sont agencées globalement parallèlement aux joints 28, 30, verticalement à proximité desdits joints 28, 30, la langue 40 s'étendant verticalement vers le bas au-dessous du niveau des deux tronçons 42A, 42B d'extrémité. La langue 40 est munie de trous 44 qui permettent de lier la vitre 22 avec un dispositif (non représenté) de commande en coulissement qui est dissimulé dans le corps creux 12.

En variante non représentée de l'invention, le bord inférieur de la vitre peut comporter plusieurs langues similaires à la langue 40, par exemple deux langues. Chacune de ces langues peut être agencée à une extrémité du bord inférieur ou dans une portion centrale du bord inférieur.

Il est aussi prévu que la vitre 22 comporte une zone 46 marquée qui est munie de motifs 48 de diffusion de la lumière. La zone 46 marquée est ici agencée sur une bande d'extrémité inférieure de la portion 22B visible, sur toute la longueur de la vitre 22. La zone 46 marquée est ainsi mitoyenne de la portion 22A cachée de la vitre 22. Dans l'exemple représenté aux figures, le reste de la portion 22B visible ne comporte pas de motifs 48 de diffusion.

Les motifs 48 de diffusion ont par exemple une fonction esthétique et/ou une fonction de communication d'information.

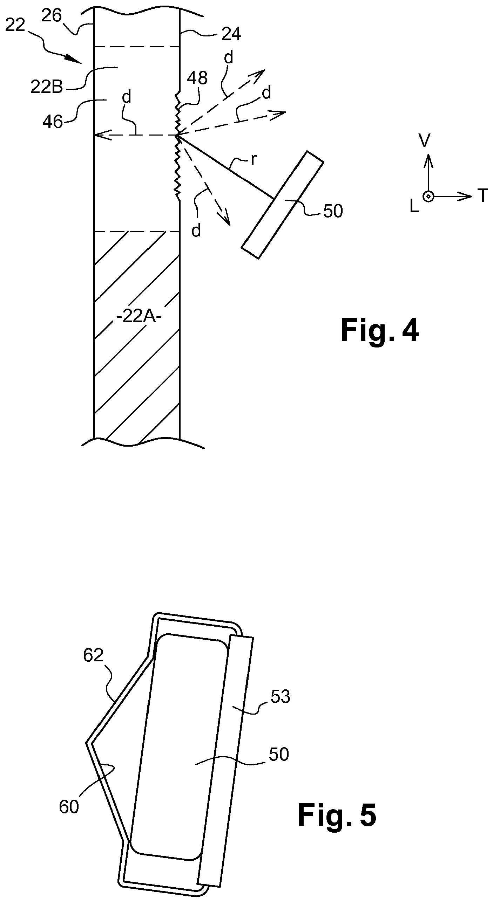

Les motifs 48 de diffusion peuvent être réalisés soit par gravure en surface de la vitre 22, par exemple au moyen d'un laser ou par sablage, soit par gravure dans l'épaisseur de la vitre 22, par exemple au moyen d'un laser. Dans l'exemple représenté à la figure 5, les motifs 48 de diffusion sont réalisés par gravure en surface de la face 24 intérieure de la vitre 22.

Comme cela est représenté à la figure 4, la portière 10 est en outre équipée d'au moins une source 50 lumineuse.

Il s'agit ici d'une source 50 lumineuse ponctuelle, formée par exemple par une diode électroluminescente. Une telle diode électroluminescente est généralement fixée sur un substrat 53, tel qu'une carte souple ou rigide à circuit imprimé. La source 50 est alimentée en électricité par une batterie (non représentée) du véhicule automobile.

Chaque source 50 lumineuse forme une source 50 lumineuse intérieure qui est décalée transversalement par rapport à la vitre 22 vers l'intérieur de l'habitacle. La première source 50 lumineuse est orientée de manière à émettre un faisceau de rayons lumineux qui atteint la vitre 22 directement par sa face 24 intérieure. Dans le contexte de l'invention, le terme "directement" signifie que les rayons lumineux ne pénètrent pas dans la vitre 22 avant d'atteindre la face 24 intérieure.

Plus particulièrement, le faisceau de rayons lumineux est orienté en direction de la zone 46 marquée pour éclairer au moins une partie des motifs 48 de diffusion.

Comme cela est représenté schématiquement par les flèches "r" de la figure 4, les rayons lumineux émis par la source 50 lumineuse atteignent la portion 22B visible de la vitre 22 par sa face 24 intérieure. Plus particulièrement, les rayons lumineux "r" atteignent la portion 46 marquée de la vitre par sa face 24 intérieure.

Les rayons lumineux "d" atteignant les motifs 48 de diffusion réalisés sur la face 24 intérieure de la vitre 22 sont diffusés dans toutes les directions, c'est-à-dire vers l'intérieur de l'habitacle, d'une part, et vers l'intérieur de la vitre 22 avant de ressortir par la face 26 extérieure vers l'extérieur de l'habitacle, d'autre part.

De cette manière, lorsque la source 50 lumineuse est allumée, le motif 48 de diffusion apparaît lumineux pour un observateur situé à l'intérieur ou à l'extérieur de l'habitacle.

La zone 46 marquée s'étend sur toute la longueur de la vitre 22. Pour permettre de l'éclairer entièrement, la portière 10 comporte avantageusement un groupe de plusieurs sources 50 lumineuses agencées du côté intérieur de la vitre 22. Le groupe de sources 50 lumineuses est par exemple formé par une bande de diodes électroluminescentes. Toutes les diodes électroluminescentes du groupe sont ainsi alignées longitudinalement. Chaque source 50 lumineuse est ainsi susceptible d'éclairer une portion de la zone 46 marquée.

Avantageusement, chaque source 50 lumineuse ponctuelle est susceptible d'être commandée individuellement entre un état éteint et un état allumé. De cette manière, il est possible d'éclairer seulement une partie de la zone 46 marquée selon le contexte d'utilisation du véhicule et/ou selon les désirs du conducteur.

Les sources 50 lumineuses sont logées dans le joint 28 intérieur de la portière 10. Comme cela est représenté à la figure 3, les sources 50 lumineuses sont plus particulièrement agencées dans le logement 54 du joint 28 intérieur. Dans l'exemple représenté, les sources 50 lumineuses reposent sur la face extérieure de la paroi 322 extérieure du corps 32 par leur substrat 53. Ladite face extérieure forme ainsi un support 325 pour les sources 50 lumineuses.

Les sources 50 lumineuses sont par exemple fixées par serrage élastique entre la visière 326 et la base de la lèvre 34. Bien que ce mode de fixation puisse être suffisant, il est aussi possible de coller le substrat 53 contre le support 325.

Les sources 50 lumineuses sont agencées de manière à émettre des rayons lumineux en direction de l'ouverture 56 du logement 54 qui débouche directement sur la portion 22B visible de la vitre 22. Ainsi, les sources lumineuses émettent des rayons lumineux qui sortent par l'ouverture 56 pour atteindre la portion 22B visible de la vitre 22 directement par sa face 24 intérieure.

Pour permettre de diriger plus précisément les rayons lumineux vers l'ouverture 56, la source 50 lumineuse peut être équipée de moyens optiques de modification de la direction de propagation des rayons lumineux tels que des lentilles optiques, des réflecteurs, ou une combinaison de ces éléments. Dans l'exemple représenté à la figure 5, la source 50 lumineuse présente un réflecteur 60 qui permet de rediriger les rayons lumineux émis vers la lèvre 34 en direction de l'ouverture 56.

Avantageusement, les sources 50 lumineuses sont agencées pour que les rayons lumineux atteignent la vitre directement par la zone 46 marquée pour éclairer au moins une partie des motifs 48 de diffusion. Dans cette configuration, le rendement des sources lumineuses est maximal car les rayons lumineux atteignent directement les motifs 48 de diffusion.

La présence de la visière 326 permet avantageusement d'éviter que les sources lumineuses ne soient directement visibles depuis l'habitacle ou depuis l'extérieur du véhicule.

Lorsque la portière 10 est équipée d'un groupe de sources 50 lumineuses, le support 325 est avantageusement commun à toutes les sources 50 lumineuses qui sont agencées longitudinalement en ligne sur dans le logement 54 sur ledit support 325.

Dans ce cas, les sources 50 lumineuses sont généralement réparties régulièrement sur la longueur du joint 28 intérieur avec un pas déterminé.

On a observé que, dans certaines conditions de luminosité ambiante et lorsque plusieurs sources 50 lumineuses adjacentes sont allumées simultanément, la vitre 22 n'était pas éclairée de manière homogène par les sources 50 lumineuses. On observe ainsi une variation d'intensités lumineuses dans une direction longitudinale sur la vitre. Ainsi, des zones dites "zones chaudes" situées en vis-à-vis des sources lumineuses présentent des pics d'intensité lumineuse, tandis que des zones, dites "zones froides" interposées longitudinalement entre les zones chaudes apparaissent plus sombres.

Pour permettre d'éclairer la zone 46 marquée de la vitre 22 de manière homogène, évitant ainsi ces zones chaudes et froides, un diffuseur 62 de lumière indépendant de la vitre 22, est interposé entre la source 50 lumineuse et l'ouverture 56 du logement. Le diffuseur 62 de lumière est ici commun à toutes les sources lumineuses.

En variante, chaque source 50 lumineuse est équipée d'un diffuseur de lumière individuel.

Le diffuseur 62 de lumière est par exemple formé par une membrane translucide qui permet de diffuser la lumière la traversant, procurant ainsi un éclairage homogène de la zone 46 marquée de la vitre 22.

Pour permettre d'allonger la durée de vie des sources 50 lumineuses, la membrane formant diffuseur 62 de lumière renferme ici de façon étanche la ou les sources lumineuses.

Cet agencement permet très avantageusement de pouvoir changer la vitre 22 sans avoir à démonter les sources 50 lumineuses.

En outre cet agencement permet de disposer les sources 50 lumineuses au plus près des motifs 48 de diffusion de la vitre 22, tout en camouflant les sources 50 lumineuses du regard des observateurs à l'intérieur ou à l'extérieur de l'habitacle.

De plus les motifs 48 lumineux sont avantageusement directement éclairés par les sources 50 lumineuses, c'est-à-dire sans entrer dans la vitre 22 avant de les atteindre, ce qui permet de maximiser leur rendement.

L'invention a été décrite en application à des vitres latérales coulissantes. On comprendra qu'elle est aussi applicable à des vitres fixes d'habitacle de véhicule automobile, telles que des vitres latérales, des parebrises, des vitres de custodes ou des vitres de toit panoramique.

## Revendications

1. Joint (28) d'étanchéité de portière interposé entre l'un des bords (23) d'une fente (21) de la portière et une face (24) en vis-à-vis d'une vitre (22) coulissant dans la fente (21), comportant un corps de joint (32) fixé audit bord (23) de la fente (21) et au moins une lèvre (34) souple s'étendant transversalement depuis le corps (32) jusqu'à un bord (35) extérieur libre qui est en appui sur ladite face (24) de la vitre (22), au moins une portion (22B) visible de la vitre (22) en position extrême de fermeture étant située au-dessus du joint (28) d'étanchéité ;
le joint (28) d'étanchéité présentant, en coupe transversale, un logement (54) débouchant par une ouverture (56) directement sur la portion (22B) visible de la vitre (22), au moins une source (50) lumineuse étant agencée dans le logement (54) sur une face du joint formant un support (325) de manière à émettre des rayons lumineux sortant par l'ouverture (56) pour atteindre la portion (22B) visible de la vitre (22) directement par ladite face (24) en vis-à-vis, le joint étant un joint d'étanchéité intérieur de portière, qui est interposé entre le bord (23) intérieur de la fente (21) et la face (24) intérieure de la vitre.

2. Joint d'étanchéité (28) selon la revendication 1, **caractérisé en ce que** le logement (54) du joint (28) est délimité par la lèvre (34) souple et par une visière (326) supérieure du corps (32), l'ouverture (56) étant réservée transversalement entre un bord d'extrémité libre de la visière (326) et la lèvre (34).

3. Joint d'étanchéité (28) selon la revendication 1 ou 2, **caractérisé en ce que** le support (325) est commun à un groupe de sources (50) lumineuses qui sont agencées longitudinalement en ligne sur dans le logement (54) sur ledit support (325).

4. Joint d'étanchéité (28) selon la revendication 1, 2 ou 3, **caractérisé en ce que** chaque source (50) lumineuse est formée par une source lumineuse ponctuelle, telle qu'une diode électroluminescente.

5. Joint d'étanchéité (28) selon la revendication précédente prise en combinaison avec la revendication 3, **caractérisé en ce que** le groupe de sources (50) lumineuses est formé par une bande de diodes électroluminescentes.

6. Joint d'étanchéité (28) selon l'une quelconque des revendications précédentes, **caractérisé en ce qu'**un diffuseur (62) de lumière est interposé entre la source (50) lumineuse et l'ouverture (56) du logement (54).

7. Joint d'étanchéité (28) selon la revendication précédente prise en combinaison avec la revendication 5, **caractérisé en ce que** le diffuseur (62) de lumière est commun à toutes les sources (50) lumineuses.

8. Joint d'étanchéité (28) selon la revendication 6 ou 7, **caractérisé en ce que** le diffuseur (62) de lumière est formé par une membrane qui renferme de façon étanche la ou les sources (50) lumineuses.

9. Joint d'étanchéité (28) selon l'une quelconque des revendications précédentes, **caractérisé en ce que** la portion (22B) visible de la vitre (22) comporte une zone (46) marquée qui est munie de motifs (48) de diffusion de la lumière, les sources (50) lumineuses étant agencées pour que les rayons lumineux atteignent la vitre directement par la zone (46) marquée pour éclairer au moins une partie des motifs (48) de diffusion.

## Patentansprüche

1. Türdichtung (28), die zwischen einem der Ränder (23) eines Schlitzes (21) der Tür und einer gegenüberliegenden Seite (24) einer im Schlitz (21) gleitenden Scheibe (22) gegenüberliegt, eingefügt ist, mit einem am Rand (23) des Schlitzes (21) befestigten Dichtungskörper (32) und mindestens einer flexiblen Lippe (34), die sich in Querrichtung vom Körper (32) bis zu einem freien Außenrand (35), der an der Seite (24) der Scheibe (22) anliegt, erstreckt, wobei mindestens ein sichtbarer Abschnitt (22B) der Scheibe (22) in der äußersten Schließposition über der Dichtung (28) liegt; wobei die Dichtung (28) im Querschnitt eine Aufnahme (54) aufweist, die über eine Öffnung (56) direkt auf den sichtbaren Abschnitt (22B) der Scheibe (22) mündet, wobei in der Aufnahme (54) auf einer Seite der Dichtung, die einen Träger (325) bildet, mindestens eine Lichtquelle (50) angeordnet ist, um Lichtstrahlen zu emittieren, die durch die Öffnung (56) austreten, um den sichtbaren Abschnitt (22B) der Scheibe (22) direkt über die gegenüberliegende Seite (24) zu erreichen, wobei es sich bei der Dichtung um eine Türinnendichtung handelt, die zwischen dem Innenrand (23) des Schlitzes (21) und der Innenseite (24) der Scheibe eingefügt ist.

2. Dichtung (28) nach Anspruch 1, **dadurch gekennzeichnet, dass** die Aufnahme (54) der Dichtung (28) durch die flexible Lippe (34) und durch eine obere Blende (326) des Körpers (32) begrenzt ist, wobei die Öffnung (56) in Querrichtung zwischen einem freien Endrand der Blende (326) und der Lippe (34) vorgesehen ist.

3. Dichtung (28) nach Anspruch 1 oder 2, **dadurch gekennzeichnet, dass** der Träger (325) einer Gruppe von Lichtquellen (50), die in Längsrichtung in einer Reihe in der Aufnahme (54) am Träger (325) angeordnet sind, gemeinsam ist.

4. Dichtung (28) nach Anspruch 1, 2 oder 3, **dadurch gekennzeichnet, dass** jede Lichtquelle (50) durch eine punktförmige Lichtquelle, wie etwa eine Leuchtdiode, ausgebildet ist.

5. Dichtung (28) nach dem vorangehenden Anspruch in Kombination mit Anspruch 3, **dadurch gekennzeichnet, dass** die Gruppe von Lichtquellen (50) durch einen Streifen von Leuchtdioden ausgebildet ist.

6. Dichtung (28) nach einem der vorangehenden Ansprüche, **dadurch gekennzeichnet, dass** zwischen der Lichtquelle (50) und der Öffnung (56) der Aufnahme (54) ein Lichtdiffusor (62) eingefügt ist.

7. Dichtung (28) nach dem vorangehenden Anspruch in Kombination mit Anspruch 5, **dadurch gekennzeichnet, dass** der Lichtdiffusor (62) allen Lichtquellen (50) gemeinsam ist.

8. Dichtung (28) nach Anspruch 6 oder 7, **dadurch gekennzeichnet, dass** der Lichtdiffusor (62) durch eine Membran ausgebildet ist, die die Lichtquelle(n) (50) dicht umschließt.

9. Dichtung (28) nach einem der vorangehenden Ansprüche, **dadurch gekennzeichnet, dass** der sichtbare Abschnitt (22B) der Scheibe (22) einen markierten Bereich (46) aufweist, der mit lichtstreuenden Motiven (48) versehen ist, wobei die Lichtquellen (50) so angeordnet sind, dass die Lichtstrahlen die Scheibe direkt über den markierten Bereich (46) erreichen, um zumindest einen Teil der streuenden Muster (48) zu beleuchten.

## Claims

1. Door seal (28) interposed between one of the edges (23) of a slot (21) of the door and a face (24) opposite belonging to a window-glass (22) sliding in the slot (21), comprising a seal body (32) fixed to said edge (23) of the slot (21) and at least one flexible lip (34) extending transversely from the body (32) as far as a free exterior edge (35) which presses against said face (24) of the window-glass (22), at least one portion (22B) of the window-glass (22) that is visible in the fully-closed position being situated above the seal (28);
the seal (28) having, in transverse section, a housing (54) that opens via an opening (56) directly onto the visible portion (22B) of the window-glass (22), at least one light source (50) being arranged in the housing (54) on a face of the seal that acts as a support (325) so as to emit rays of light which exit via the opening (56) to reach the visible portion (22B) of the window-glass (22) directly via said face (24) opposite, the seal being an interior door seal which is interposed between the interior edge (23) of the slot (21) and the interior face (24) of the window-glass.

2. Seal (28) according to Claim 1, **characterized in that** the housing (54) of the seal (28) is delimited by the flexible lip (34) and by an upper projecting peak (326) of the body (32), the opening (56) being reserved transversely between a free end edge of the projecting peak (326) and the lip (34).

3. Seal (28) according to Claim 1 or 2, **characterized in that** the support (325) is common to a group of light sources (50) which are arranged longitudinally in a line in the housing (54) on said support (325).

4. Seal (28) according to Claim 1, 2 or 3, **characterized in that** each light source (50) is formed by a point light source, such as a light-emitting diode.

5. Seal (28) according to the preceding claim considered in combination with Claim 3, **characterized in that** the group of light sources (50) is formed by a strip of light-emitting diodes.

6. Seal (28) according to any one of the preceding claims, **characterized in that** a light diffuser (62) is interposed between the light source (50) and the opening (56) of the housing (54).

7. Seal (28) according to the preceding claim considered in combination with Claim 5, **characterized in that** the light diffuser (62) is common to all the light sources (50).

8. Seal (28) according to Claim 6 or 7, **characterized in that** the light diffuser (62) is formed by a membrane which encloses the light source or sources (50) in a sealed manner.

9. Seal (28) according to any one of the preceding claims, **characterized in that** the visible portion (22B) of the window-glass (22) comprises a marked zone (46) which is equipped with light-diffusing patterns (48), the light sources (50) being arranged in such a way that the rays of light reach the window-glass directly via the marked zone (46) so as to illuminate at least part of the diffusing patterns (48).
